# EUROPEAN PATENT APPLICATION

(11) **EP 4 424 533 A1**
(43) Date of publication of application: **04.09.2024**
(21) Application number: 24160417.2
(22) Date of filing: 29.02.2024
(51) Int. Cl.: B60H 1/00

(54) **AIR CONDITIONING UNIT FOR A MOTOR VEHICLE, COMPRISING A DOOR WITH A BYPASS AIR PASSAGE**

(30) Priority: 03.03.2023 IT 202300003840
(71) Applicant: DENSO THERMAL SYSTEMS S.p.A., 10046 Poirino (Torino) (IT)
(72) Inventor: BENEDETTO, Roberto, I-10046 POIRINO (Torino) (IT); BASEGGIO, Daniele, I-10046 POIRINO (Torino) (IT)
(74) Representative: Vanzini, Christian

(57) **Abstract**

Air conditioning unit for a motor vehicle, comprising a door (50) mounted to a housing (C) of the air conditioning unit and rotatable about a rotation axis (x) to selectively open or close an air duct (10) formed in the housing (C) of the air conditioning unit, wherein the door (50) comprises a shaft (51) and a blade portion (52) extending from the shaft (51) of the door (50), and in an outer surface (51a) of the shaft (51) at least one recess (51b) is formed, which is configured to define a bypass air passage between the shaft (51) of the door (50) and a seat surface (11a) of a first wall (11) of the air duct (10).

## Description

The present invention relates to an air-conditioning unit for a motor vehicle, comprising a housing in which at least one air duct is formed which is delimited between a first wall and a second wall of the housing, wherein along said at least one air duct a door is arranged which is mounted to said housing and is rotatable about a rotation axis to selectively open or close said at least one air duct, said door comprising
a shaft arranged close the first wall, and through which the door is hinged to the housing, and
a blade portion extending from the shaft of the door and having a distal end drivable into proximity with the second wall,
wherein on the first wall a seat surface is formed, having a circular arc-shaped profile coaxial with the rotation axis of the door and delimited on opposite sides by respective side edges, and wherein the shaft of the door has an outer surface having a circular arc-shaped profile matching said seat surface.

It is known that in order to achieve a proper and gradual mixing of hot and cold air flows in an air conditioning unit, bypass passages may be formed in the housing of the air conditioning unit. However, the shape and positioning of these passages are affected by the molding process, and therefore may not be optimized from the perspective of the required mixing performance.

An object of the invention is to provide a solution capable of at least partially resolving the aforesaid drawbacks.

In view of these objects, the subject matter of the invention is an air conditioning unit of the type defined above, in which at least one recess configured to define a bypass air passage between the shaft of the door and the seat surface of the first wall is formed in the outer surface of the shaft, said at least one recess having a bottom surface between the rotation axis of the door and the seat surface of the first wall.

Such a solution, which comprises a mixing door with an integrated bypass duct and a fixed counterpart such as the distribution housing, enables precise regulation of the air mixing and thus the temperature in an air conditioning unit.

The construction of a bypass duct integrated with the door is not constrained by the molding process in terms of shape and position. Thus, the mixing of the air may be improved by placing one or more bypass passages even with different shapes along the entire length of the mixing door.

Moreover, the construction of the bypass duct on a moving means, the mixing door, allows an air passage that is variable depending on the position thereof in relation to the fixed part formed by the housings of the air conditioning unit.

Further features and advantages of the unit according to the invention will become clearer from the following detailed description of an embodiment of the invention, made in reference to the accompanying drawings, provided purely for illustrative and non-limiting purposes, wherein:
Fig. 1 to 3 are partial sectional views of an air conditioning unit according to the invention, in three different operating positions;
Fig. 4 and 5 are perspective views of a door of the air conditioning unit in Fig. 1; and
Fig. 6a to 6d are perspective views of different variants according to the invention.

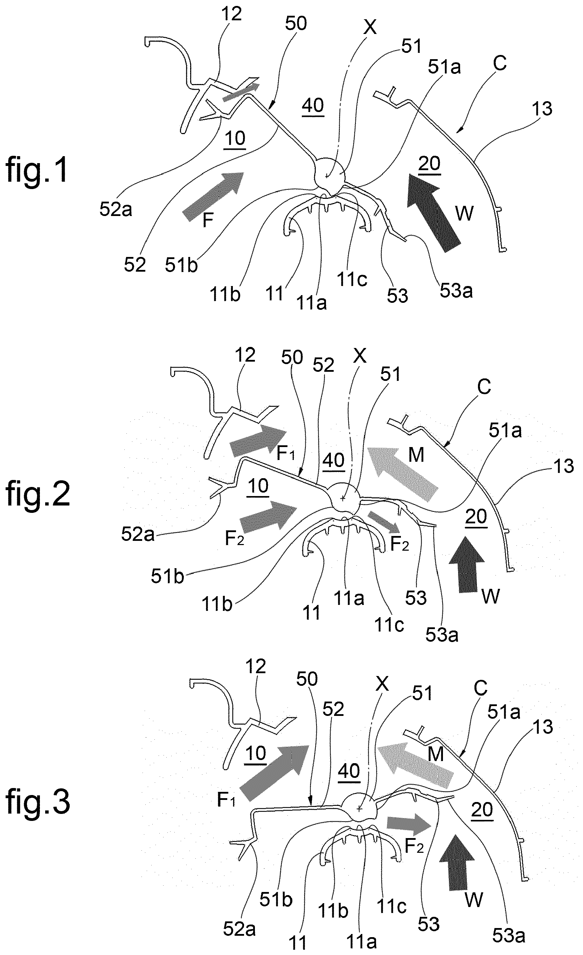

Fig. 1-3 show a detail of a housing C of an air conditioning unit for a motor vehicle, within which are formed air conveyance ducts. In particular, Fig. 1-3 show an air transmission duct 10 and an air heating duct 20 flowing into a mixing zone 40. At the mixing zone 40 a movable door 50 is arranged, which is used to control the air flow within the conveyance ducts formed in the housing C, and thus to manage the mixing between a heated air flow W coming from the air heating duct 20 and an unheated air flow F coming from the air transmission duct 10. Any mixed air flow is conveyed from the mixing zone 40, in ways known per se and not shown, to various parts of the passenger compartment and against the windshield of the motor vehicle. The shape and arrangement of the ducts 10, 20 and the mixing chamber 40 are not essential for the purposes of the invention.

The air transmission duct 10 is delimited between a first wall 11 and a second wall 12 of the housing C. The air heating duct 20 is delimited between the first wall 11 and a third wall 13 of the housing C. In addition to the walls mentioned above, the ducts are delimited in the direction orthogonal to the plane of the drawing by additional walls of the housing C, not shown. For the purposes of the present description, the term "wall" comprises both outer walls and inner septa of the housing C.

The door 50 is rotatable about a rotation axis x, and is constrained to the housing C by a shaft denoted as 51, having opposite ends supported by the housing C in a manner not shown. In the example shown, the door 50 comprises a pair of blade portions 52, 53 extending from the shaft of the door 31 and having respective distal ends 52a, 53a that, due to the rotation of the door 50 about the axis x, may be brought in proximity to the respective walls 12 and 13 of the housing C. In this way, the door 50 may be controlled to selectively open or close the ducts 10 and 20. The number and arrangement of the blade portions of the door may differ from those depicted in the figures.

The shaft 51 of the door 50 is arranged close to the first wall 11 of the housing C.

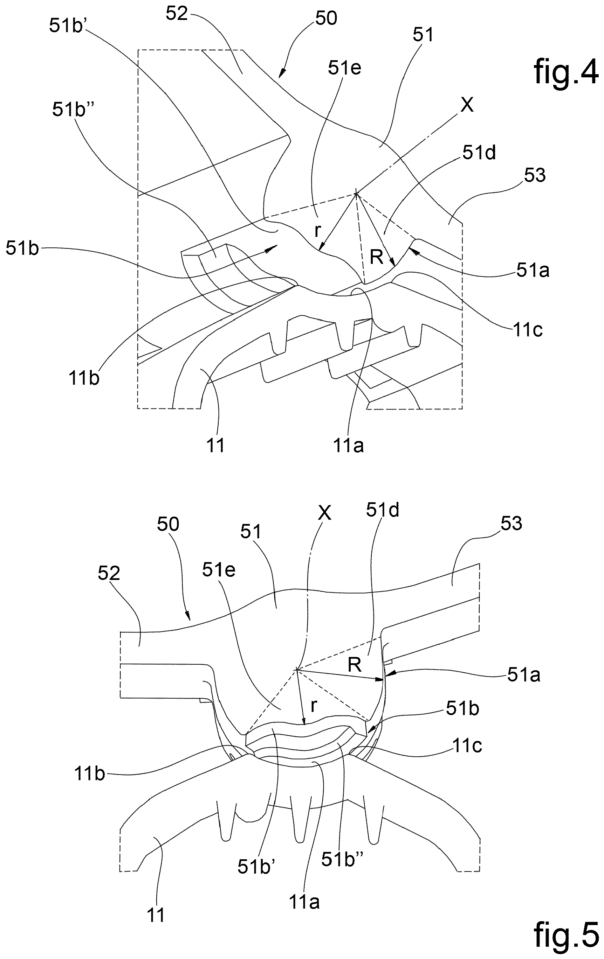

With reference also to Fig. 4 and 5, on the first wall 11 a seat surface 11a is formed having a circular arc-shaped profile coaxial with the rotation axis x of the door 50. The seat surface 11a is delimited on opposite sides by respective side edges 11b and 11c, which in the example shown define respective cusps with respect to the portions of the first wall 11 adjacent to the seat surface 11a.

The shaft 51 of the door 50 has an outer surface 51a having a circular arc-shaped profile matching with the seat surface 11a. It should be noted that in Fig. 4 the outer surface 51a of the shaft 51 has, for the sake of clarity, been shown with a radius such that there is an obvious gap between it and the seat surface 11a. It is intended, however, that when the outer surface 51a of the shaft 51 is placed facing the seat surface 11a, this gap is minimal or zero so as to prevent an air flow from passing between the outer surface 51a and the seat surface 51.

In the outer surface 51a of the shaft 51 at least one recess 51b is formed configured to define a bypass air passage between the shaft 51 of the door 50 and the seat surface 1 1a of first wall 11. The recess 51b has a bottom surface interposed between the rotation axis x of the door 50 and the seat surface 11a of the first wall 11. In the example shown, the recess 51b has a variable profile along the rotation axis x of the door. In particular, the recess 51b depicted has a first axial section 51b' that has a bottom surface with a non-circular profile, and a second axial section that has a circular arc-shaped profile.

In the shaft 51, a first shaft sector 51d is defined, radially delimited by the outer surface 51a of the shaft 51, and a second shaft sector 51e adjacent (in the tangential direction) to the first shaft sector 51d and radially delimited by a bottom surface of the recess 51b. This bottom surface has, in the direction normal to the rotation axis x of the door 50, a radius r (possibly variable) smaller than the radius R (constant) of the outer surface 51a of the shaft 51.

The angular position of the door 50 causes the first shaft sector 51d to be placed at least partially facing the seat surface 11a of the first wall 11, preventing the air from passing between the shaft 51 of the door 50 and the seat surface 1 1a of the first wall 11.

Fig. 2 and 3 show the effect that may be formed due to the presence of the recess 51b. In such figures, the door 50 is shown in intermediate positions that allow air to pass through both the channels 10 and 20. In such positions, the first shaft sector 51d is placed entirely outside the side edges 11b, 11c of the seat surface 11a of the first wall 11, and the bypass air passage is therefore defined between the second shaft sector 51e and the seat surface 11a of the first wall 11. The unheated air flow is divided into two partial flows F₁ and Fz, one of which passes through the bypass air passage and achieves a preliminary mixing with the heated air flow W, represented by the arrow M, which reaches the mixing chamber 40. As may be seen from a comparison of Fig. 2 and 3, the passage section of the bypass air passage is adjustable according to the angular position of the door 50.

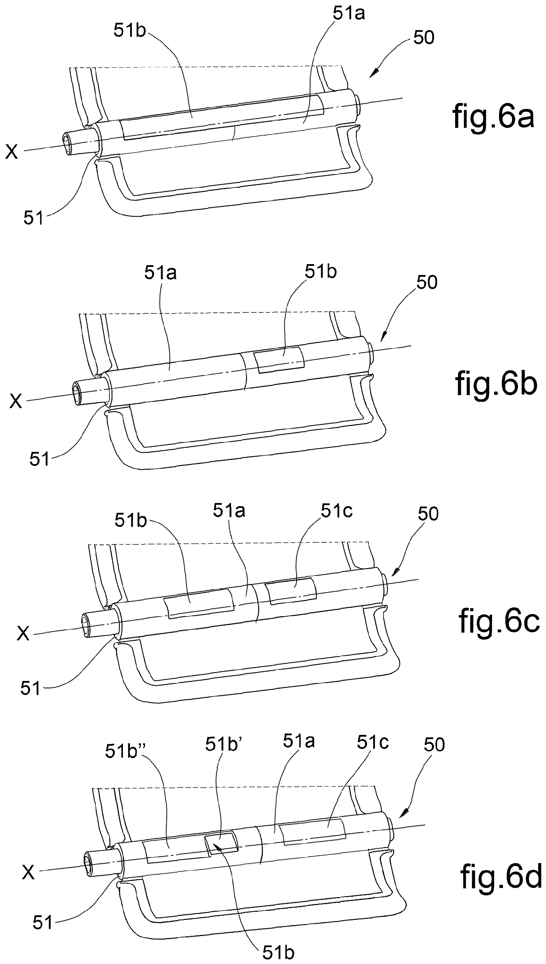

Possible examples of the shape and arrangement of the recess 51b are shown in Fig. 6a through 6d. In the example in Fig. 6a, there is a recess 51b which extends for a length equal to the usable length of the shaft 51, i.e., substantially equal to the width of the air duct in the direction of the rotation axis x of the door 50. Further, the recess 51b has a constant profile along the rotation axis x of the door 50. In the example in Fig. 6b, there is a localized recess 51b, i.e., one that extends for a length less than the width of the air duct in the direction of the rotation axis x of the door 50. Furthermore, the recess 51b has a constant profile along the rotation axis x of the door 50. In the example in Fig. 6c, there are two localized recesses 51b and 51c. Moreover, the recesses 51b and 51c each have a constant profile along the rotation axis x of the door 50. The example in Fig. 6d shows two localized recesses 51b and 51c. Furthermore, the recess 51b has a variable profile along the rotation axis x of the door 50, and the recess 51c has a constant profile along the rotation axis x of the door 50.

## Claims

1. Air conditioning unit for a motor vehicle, comprising a housing (C) in which at least one air duct (10) is formed which is delimited between a first wall (11) and a second wall (12) of the housing (C), wherein along said at least one air duct (10) a door (50) is arranged which is mounted to said housing and is rotatable about a rotation axis (x) to selectively open or close said at least one air duct, said door (50) comprising
a shaft (51) arranged close to the first wall (11), and through which the door (50) is hinged to the housing (C), and
a blade portion (52) extending from the shaft (51) of the door (50) and having a distal end (52a) drivable into proximity with the second wall (12) to selectively open or close said at least one air duct,
wherein on the first wall (11) a seat surface (11a) is formed, having a circular arc-shaped profile coaxial with the rotation axis (x) of the door (50) and delimited on opposite sides by respective side edges (11b, 11c), and wherein the shaft (51) of the door (50) has an outer surface (51a) having a circular arc-shaped profile matching with said seat surface,
**characterized in that** in the outer surface (51a) of the shaft (51) at least one recess (51b, 51c) is formed, which is configured to define a bypass air passage between the shaft (51) of the door (50) and the seat surface (11a) of the first wall (11), said at least one recess (51b, 51c) having a bottom surface between the rotation axis (x) of the door (50) and the seat surface (11a) of the first wall (11).

2. Air conditioning unit according to claim 1, wherein said at least one recess (51b, 51c) extends over a length substantially equal to the width of said at least one air duct (10) in the direction of the rotation axis (x) of the door (50).

3. Air conditioning unit according to claim 1, wherein said at least one recess (51b, 51c) extends over a length smaller than the width of said at least one air duct (10) in the direction of the rotation axis (x) of the door (50).

4. Air conditioning unit according to any of the preceding claims, wherein said at least one recess (51b, 51c) has a cross-sectional profile which changes along the rotation axis (x) of the door (50).

5. Air conditioning unit according to any of the preceding claims, wherein said at least one recess (51b, 51c) has a bottom surface having a circular arc-shaped cross-sectional profile.

6. Air conditioning unit according to any of claims from 1 to 4, wherein said at least one recess (51b, 51c) has a bottom surface having a non-circular cross-sectional profile.

7. Air conditioning unit according to any of the preceding claims, wherein the shaft (51) of the door (50) comprises
a first shaft sector (51d) radially delimited by said outer surface (51a) of the shaft (51), and a second shaft sector (51e) adjacent to the first shaft sector (5 1d) and radially delimited by the bottom surface of said at least one recess (51b, 51c), said bottom surface having, in the direction normal to the rotation axis (x) of the door (50), a radius (r) smaller than the radius (R) of the outer surface (51a) of the shaft (51).

8. Air conditioning unit according to claim 7, wherein said door (50) is rotatable between at least one first position in which the first shaft sector (51d) is placed at least partially facing the seat surface (11a) of the first wall (11) and prevents an air flow from passing between the shaft (51) of the door (50) and the seat surface (11a) of the first wall (11), and at least one second position in which the first shaft sector (51d) is placed entirely outside of the side edges (11b, 11c) of the seat surface (11a) of the first wall (11), and said bypass air passage is defined between the second shaft sector (51e) and the seat surface (11a) of the first wall (11).
